# EUROPÄISCHE PATENTSCHRIFT

(11) **EP 2 689 676 B1**
(45) Veröffentlichungstag und Bekanntmachung des Hinweises auf die Patenterteilung: **03.06.2015**
(21) Anmeldenummer: 13173640.7
(22) Anmeldetag: 25.06.2013
(51) Int. Cl.: A23L 3/04

(54) **Tunnelpasteur und Pasteurisierungsverfahren für Getränkegebinde**
Pasteurisation tunnel and pasteurisation method for beverage containers
Tunnel de pasteurisation et procédé de pasteurisation pour emballages de boissons

(30) Priorität: 23.07.2012 DE 102012212873
(43) Veröffentlichungstag der Anmeldung: 29.01.2014
(73) Patentinhaber: Krones AG, 93073 Neutraubling (DE)
(72) Erfinder: Krause, Hans-Joachim, 93073 Neutraubling (DE)
(74) Vertreter: Grünecker Patent- und Rechtsanwälte PartG mbB

(56) Entgegenhaltungen:
- EP-A2- 0 169 361
- DE-U- 1 910 136

## Beschreibung

Die Erfindung betrifft einen Tunnelpasteur nach dem Oberbegriff des Anspruchs 1 sowie ein Verfahren zur Pasteurisierung von Getränkegebinden nach dem Oberbegriff des Anspruchs 10.

Tunnelpasteure dienen bekanntermaßen zum Pasteurisieren abgefüllter Produkte, wobei die befüllten Behälter, wie beispielsweise Flaschen, Dosen oder andere Getränkegebinde, auf einem Förderband durch den Tunnelpasteur transportiert werden und gleichzeitig von oben durch Berieseln mit einer erhitzten Flüssigkeit, insbesondere heißem Wasser, beaufschlagt werden. Zur Steigerung der Maschinenleistung ist es ferner bekannt, mehrere gleichartige Behandlungsdecks des Tunnelpasteurs übereinander anzuordnen, um den Produktstrom auf mehrere im Wesentlichen gleichartig behandelte Teilproduktströme parallel aufzuteilen.

Bei einer bevorzugten Variante bekannter Tunnelpasteure werden die zu pasteurisierenden Produkte von oben mittels quer zur Transportrichtung der Produkte angeordneter Spritzrohre berieselt. Die Spritzrohre sind jeweils an einem Ende verschlossen und werden am anderen Ende an eine gemeinsame Versorgungsleitung für die Berieselungsflüssigkeit angeschlossen. Bezüglich des Stroms der Berieselungsflüssigkeit sind die Spritzrohre somit jeweils parallel geschaltet. Mit einer derartigen mehrstöckigen Parallelschaltung der Behandlungsdecks lassen sich über alle Behandlungsdecks gleichmäßige Behandlungsbedingungen herstellen.

Problematisch ist jedoch, dass sich am Ende der jeweiligen Spritzrohre im Strömungsnachlauf hinter der jeweils zuletzt angeströmten Düse Ablagerungen ansammeln, die einzelne Spritzdüsen der Spritzrohre verengen oder gar verstopfen können, so dass die von dem jeweiligen Spritzrohr ausgebrachte Überschüttmenge nicht für alle Spritzrohre und Behandlungsdecks einheitlich eingehalten werden kann. Derartige Ablagerungen müssen daher regelmäßig durch Revisionsöffnungen am Ende der Spritzrohre entfernt werden. Problematisch ist hierbei weiterhin, dass eine Vielzahl derartiger Revisionsöffnungen vorzusehen sind, die aufgrund der mehrstöckigen Konstruktion derartiger Tunnelpasteure zum Teil schwer zugänglich sind. Konstruktionsbedingt sind alle Behandlungsdecks in dieser Hinsicht im Wesentlichen gleichermaßen störungsanfällig. Entsprechend aufwändig ist die Inspektion der Berieselung im laufenden Betrieb.

Es besteht daher der Bedarf für Tunnelpasteure und entsprechende Pasteurisierungsverfahren, bei denen die Störungshäufigkeit aufgrund von Ablagerungen in den Spritzrohren, und somit der Aufwand für die Inspektion und die Reinigung einzelner Spritzrohre, reduziert werden kann.

Die gestellte Aufgabe wird mit einem Tunnelpasteur gemäß Anspruch 1 gelöst. Demnach sind beim erfindungsgemäßen Tunnelpasteur wenigstens ein erstes und ein zweites Deck mit quer zur Förderrichtung der zu pasteurisierenden Produkte verlaufenden Spritzrohren derart vorgesehen, dass die Spritzrohre des ersten Decks mittels Reihenschaltung mit den Spritzrohren des zweiten Decks verbunden sind, um eine Berieselungsflüssigkeit durch das erste Deck zum zweiten Deck zu leiten.

Die Reihenschaltung erfolgt insbesondere derart, dass ein Strömungsnachlauf in den Spritzrohren des ersten Decks vermieden wird. Somit können auch Ablagerungen im Bereich des ersten Decks vermieden werden. Demzufolge sind Revisionsöffnungen im Bereich des ersten Decks entbehrlich. Anders gesagt, ist es bei dem erfindungsgemäßen Tunnelpasteur ausreichend, lediglich den Strömungsnachlauf im zweiten Deck, oder im jeweils in Strömungsrichtung letzten Deck, zu kontrollieren und dort gegebenenfalls vorhandene Ablagerungen durch eine Revisionsöffnung zu entfernen. Folglich lässt sich der Aufwand für die Inspektion und die Reinigung der Spritzrohre des erfindungsgemäßen Tunnelpasteurs im Vergleich zum Stand der Technik deutlich reduzieren. Der Strömungsnachlauf ist beispielsweise als Bereich hinter der zuletzt angeströmten Berieselungsdüse definiert.

Vorzugsweise ist der Leitungsquerschnitt der in Reihe geschalteten Spritzrohre im ersten Deck größer als im zweiten Deck. Dadurch kann zusätzlich zu der von den Düsen des ersten Decks abgegebenen Berieselungsflüssigkeit auch die für das zweite Deck benötigte Berieselungsflüssigkeit durch die Spritzrohre des ersten Decks transportiert werden. Somit ermöglicht der im ersten Deck erhöhte Leitungsquerschnitt trotz des zusätzlichen Volumenstroms für das zweite Deck gleichartige dynamische Druckbedingungen an den Düsen des ersten Decks und des zweiten Decks. Dadurch lassen sich die Überschüttmengen der Berieselungsflüssigkeit im ersten und zweiten Deck aneinander angleichen.

Bei einer besonders günstigen Ausführungsform sind entlang der Förderrichtung mehrere Reihenschaltungen vorgesehen, insbesondere in der Art, dass jeweils genau ein Spritzrohr des ersten Decks mit genau einem Spritzrohr des zweiten Decks verbunden ist. Derartige Reihenschaltungen sind besonders einfach zu realisieren und besonders betriebssicher. Insbesondere ein direktes Hintereinanderschalten der einzelnen Spritzrohre ohne Parallelverzweigungen ermöglicht reproduzierbare Volumenströme durch die jeweiligen Spritzrohre, so dass die Wahrscheinlichkeit für ein Auftreten unerwünschter Ablagerungen besonders effektiv reduziert werden kann. Es wäre jedoch generell auch denkbar, beispielsweise zwei oder drei nebeneinander angeordnete Spritzrohre des ersten Decks ausgangsseitig durch eine Parallelschaltung zusammenzufassen und ein gemeinsames Überleitungsrohr zum zweiten Deck vorzusehen. Dort könnte das Überleitungsrohr wiederum auf eine gleiche Anzahl von Spritzrohren parallel aufgezweigt werden. Der Leitungsquerschnitt des Überleitungsrohrs könnte dann entsprechend groß gewählt werden, um unerwünschte Druckverluste zu vermeiden.

Insbesondere können jeweils übereinander liegende Spritzrohre in Reihe geschaltet sein. Dies ermöglicht eine besonders einfache Leitungsführung. Eine einzelne Reihenschaltung umfasst somit vorzugsweise alle jeweils übereinander liegenden Spritzrohre der in dem Tunnelpasteur vorgesehenen Decks. Es ist zwar vorteilhaft, alle Spritzrohre des Tunnelpasteurs durch Reihenschaltung über die vorgesehenen Decks zu verbinden. Jedoch ist dies nicht zwingend erforderlich. Beispielsweise könnten einzelne Behandlungsabschnitte entlang des Förderers in der beschriebenen Reihenschaltung verbunden sein, andere Behandlungsabschnitte entlang des Förderers dagegen nicht. Je nach Behandlungsaufgabe sind beliebige Kombinationen in Reihe geschalteter Spritzrohre und parallel geschalteter Spritzrohre denkbar.

Bei einer besonders günstigen Ausführungsform liegt das zweite Deck über dem ersten Deck. Somit kann eine Versorgungsleitung für die Berieselungsflüssigkeit im Bereich des unteren Decks vorgesehen werden. Entsprechend kann die Inspektion und Reinigung des zweiten Decks in einem gut zugänglichen oberen Abschnitt des Tunnelpasteurs erfolgen.

Vorzugsweise ist die Anzahl der Düsen pro Spritzrohr im jeweils oberen Deck größer als im jeweils unteren Deck. Da im jeweils oberen Deck ein geringerer geodätischer Druck herrscht als im jeweils unteren Deck, lässt sich eine im oberen Deck aufgrund des geringeren geodätischen Drucks geringere Überschüttmenge pro einzelner Düse dadurch ausgleichen, dass die Anzahl der Düsen pro Spritzrohr im Vergleich zum jeweils unteren Deck erhöht wird.

Vorzugsweise sind die Anzahl der Düsen pro Spritzrohr und/oder die Abstände zwischen den Düsen einzelner Spritzrohre zur Kompensation einer geodätischen Druckdifferenz zwischen dem ersten und dem zweiten Deck angepasst, insbesondere in der Art, dass die von den einzelnen Spritzrohren jeweils abgegebene Überschüttmenge der Berieselungsflüssigkeit von einem Mittelwert der Überschüttmenge über alle Spritzrohre nicht mehr als 10%, insbesondere nicht mehr als 5%, abweicht.

Dadurch lässt sich für alle Decks und/oder Spritzrohre eine im Wesentlichen gleichartige Pasteurisierung der durchgeleiteten Getränkegebinde gewährleisten. Ebenso ließe sich mittels der Anzahl der Düsen pro Spritzrohr und/oder der jeweiligen Düsenabstände ein Unterschied des statischen Drucks zwischen den einzelnen Decks kompensieren. Da die unterschiedlichen Höhenniveaus der einzelnen Behandlungsdecks konstant und bekannt sind, lässt sich die jeweilige Überschüttmenge der einzelnen Decks somit auf einfache Weise aneinander angleichen.

Eine besonders günstige Ausführungsform umfasst ferner wenigstens ein im Bereich des zweiten Decks vorgesehenes Inspektionsfenster, eine Inspektionsklappe oder dergleichen zur visuellen Berieselungskontrolle. Dadurch lässt sich die Behandlungsqualität auf einfache Weise sicherstellen. Ebenso denkbar wären Inspektionskameras im Bereich des zweiten Decks. Eine visuelle Kontrolle der Berieselung im Bereich des ersten Decks ist dagegen entbehrlich.

Vorzugsweise umfassen die Spritzrohre des zweiten Decks an ihrem in Durchströmungsrichtung hinteren Ende eine von außen zugängliche Revisionsöffnung, insbesondere im Strömungsnachlauf hinter der jeweils zuletzt angeströmten Düse. Die Revisionsöffnung ist während des Betriebs des Tunnelpasteurs verschlossen. Hierfür ist ein geeigneter Deckel vorgesehen, der beispielsweise ein Schauglas umfassen kann. Unter dem Strömungsnachlauf ist insbesondere ein Bereich zu verstehen, in dem die Strömungsenergie geringer ist als in den Bereichen der Düsen und der Bereiche zwischen den Düsen. Unter der Revisionsöffnung ist eine Öffnung zu verstehen, die einen ausreichenden Zugang zum jeweiligen Spritzrohr zum Zwecke der Instandhaltung und/oder Reinigung ermöglicht.

Eine besonders günstige Ausführungsform umfasst ferner wenigstens ein weiteres Deck, das zwischen dem ersten und dem zweiten Deck liegt und dessen Spritzrohre in Reihe zwischengeschaltet sind. Es könnten somit auch für die weiteren Decks dieselben Vorteile erzielt werden, wie dies für das erste Deck beschrieben ist. Das heißt, aufgrund der Reihenschaltung ist auch eine Inspektion und/oder Reinigung der Spritzrohre der weiteren Decks entbehrlich. Entsprechend genügt auch bei einer wenigstens dreistöckigen Ausführungsform des erfindungsgemäßen Tunnelpasteurs eine Inspektion und/oder Reinigung der jeweils am Ende der Reihenschaltung vorgesehenen Spritzrohre. Dabei lassen sich die einzelnen Decks durch im Wesentlichen identische Tunnelmodule realisieren, die auf einander gestapelt sind und sich lediglich durch die bezüglich des ersten und zweiten Decks beschriebenen Leitungseigenschaften unterscheiden. Insbesondere können auch bei mehrstöckigen Tunnelpasteuren die Leitungsquerschnitte von Deck zu Deck stufenartig angepasst werden. Dies gilt ebenso für die beschriebene Anpassung der Spritzdüsenanzahl pro Spritzrohr und/oder die Düsenabstände einzelner Spritzrohre. Mit derartigen mehrstöckigen Tunnelpasteuren lässt sich die Maschinenleistung bei für alle Decks gleichmäßiger Behandlungsqualität weiter steigern.

Die gestellte Aufgabe wird ferner mit einem Pasteurisierungsverfahren gemäß Anspruch 10 gelöst. Demnach werden die Getränkegebinde auf wenigstens zwei übereinander liegenden Behandlungsdecks gefördert und aus jeweils quer zur Förderrichtung der Getränkegebinde verlaufenden Spritzrohren mit einer erhitzten Berieselungsflüssigkeit berieselt. Erfindungsgemäß wird die Berieselungsflüssigkeit durch die Spritzrohre des einen Behandlungsdecks in die Spritzrohre des anderen Behandlungsdecks geleitet.

Mit dem erfindungsgemäßen Verfahren lassen sich beliebige Gebinde, wie beispielsweise Flaschen, Kanister, Dosen oder dergleichen, mit einem zu pasteurisierenden Produkt, wie beispielsweise einem Getränk, einem anderen Lebensmittel oder dergleichen, durch Hitze behandeln. Das erfindungsgemäße Verfahren ermöglicht insbesondere eine für alle Decks gleichartige Behandlungsqualität durch Bereitstellen einer gleichartigen Überschüttmenge in den einzelnen Decks. Dadurch, dass die Berieselungsflüssigkeit durch wenigstens ein Behandlungsdeck hindurch geleitet wird, können Ablagerungen in den Spritzrohren dieser Behandlungsdecks zuverlässig vermieden werden. Dadurch sinkt der Aufwand für die Inspektion und die Reinigung dieser Decks.

Vorzugsweise ist die mittlere Steuerungsgeschwindigkeit in den Spritzrohren nicht größer als 5 m/s, insbesondere nicht größer als 4 m/s, dadurch lässt sich der dynamische Druck im Bereich der Düsen für die gewünschte Berieselung bereitstellen.

Vorzugsweise unterscheidet sich die mittlere Strömungsgeschwindigkeit in den Spritzrohren zwischen den Decks um nicht mehr als 20%, insbesondere um nicht mehr als 10%. Das heißt, das erfindungsgemäße Verfahren ermöglicht in allen Decks gleichermaßen geeignete dynamische Drücke in den Spritzrohren, um eine gleichmäßige Berieselung in allen Decks zu gewährleisten.

Bei einer besonders günstigen Variante des erfindungsgemäßen Verfahrens werden ferner die Querschnitte der Spritzrohre angepasst, um die jeweiligen dynamischen Drücke der Berieselungsflüssigkeit an den Düsen unterschiedlicher Decks aneinander anzugleichen. Anders gesagt, werden die Volumenströme in den einzelnen Abschnitten der Reihenschaltung so angepasst, dass sowohl eine Versorgung der jeweils nachgeschalteten Spritzrohre gewährleistet ist, als auch eine im Wesentlichen einheitliche mittlere Strömungsgeschwindigkeit. Dadurch lässt sich die Berieselungsqualität der einzelnen Decks auf besonders einfache Weise aneinander angleichen.

Vorzugsweise wird/werden ferner die Anzahl jeweils pro Spritzrohr vorgesehener Düsen und/oder die Abstände zwischen Düsen einzelner Spritzrohre zwischen unterschiedlichen Decks aneinander angepasst, um Unterschiede zwischen statischen und/oder geodätischen Drücken der Berieselungsflüssigkeit in den Spritzrohren der unterschiedlichen Decks zu kompensieren. Dadurch lässt sich die jeweilige Überschüttmenge der einzelnen Decks zusätzlich aneinander angleichen.

Vorzugsweise durchlaufen die Getränkegebinde die Decks als parallele Teilproduktströme. Somit werden die Getränkegebinde in allen Decks vorzugsweise gleichartig behandelt. Entsprechend eignet sich das erfindungsgemäße Verfahren für die im Bereich von Abfüllanlagen geforderten hohen Produktionsleistungen.

Eine bevorzugte Ausführungsform der Erfindung ist in der Zeichnung dargestellt. Es zeigen:
Figur 1 einen Querschnitt durch einen zweistöckigen Tunnelpasteur; und
Figur 2 eine schematische Draufsicht auf den Tunnelpasteur der Figur 1.

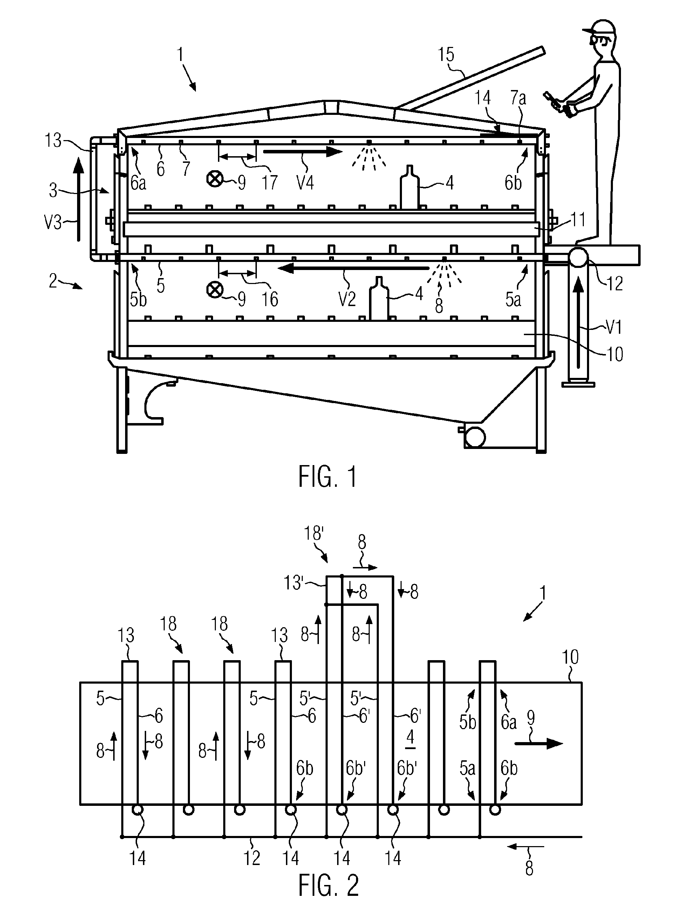

Wie die Figur 1 erkennen lässt, umfasst eine zweistöckige Ausführungsform des erfindungsgemäßen Tunnelpasteurs 1 ein erstes, unteres Deck 2 und ein oberes, zweites Deck 3, jeweils zur gleichartigen Berieselung von Getränkegebinden 4 aus den Decks 2, 3 zugeordneten Spritzrohren 5, 6. Letztere umfassen jeweils Düsen 7, aus denen eine Berieselungsflüssigkeit 8, wie beispielsweise erhitztes Wasser, auf die unter den Spritzrohren 5, 6 in einer Förderrichtung 9 hindurch laufenden Getränkegebinde 4 abgegeben wird. Wie die Figur 1 ferner erkennen lässt, sind die Spritzrohre 5, 6 quer zur Förderrichtung 9 der Getränkegebinde 4 vorgesehen. Die Getränkegebinde 4 stehen während der Pasteurisierung auf gleichsinnig betriebenen Förderern 10, 11. Diese können als Förderbänder bekannter Bauart ausgebildet sein und werden daher nicht näher erläutert.

Bei dem erfindungsgemäßen Tunnelpasteur 1 sind in den Decks 2, 3 jeweils mehrere quer verlaufende Spritzrohre 5, 6 in der Förderrichtung 9 hintereinander liegend vorgesehen. Die Spritzrohre 5, 6 können in bekannter Weise im Wesentlichen parallel zueinander ausgerichtet sein. Dies ist in der Figur 2 schematisch angedeutet. Im Unterschied zu bekannten Vorrichtungen zweigen jedoch nur die Spritzrohre 5 des ersten Decks 2 parallel geschaltet von einer Versorgungsleitung 12 ab. Diese verläuft dementsprechend in der Figur 1 in die Zeichenebene hinein bzw. aus dieser heraus.

In der Figur 1 sind Volumenströme V1 bis V4 der Berieselungsflüssigkeit 8 zur Verdeutlichung einer in dem erfindungsgemäßen Tunnelpasteur 1 realisierten Reihenschaltung durch die Decks 2, 3 schematisch angedeutet. Demnach bezeichnet der Volumenstrom V1 den über die Versorgungsleitung 12 insgesamt dem Tunnelpasteur 1 zugeführten Volumenstrom der Berieselungsflüssigkeit 8. Von der Versorgungsleitung 12 zweigen die Spritzrohre 5 des ersten, unteren Decks 2 parallel ab. Somit verteilt sich der Volumenstrom V1 auf die jeweiligen Teilvolumenströme V2 durch die einzelnen Spritzrohre 5 des ersten Decks 2. Die Teilvolumenströme V2 dienen jeweils der Versorgung der Düsen 7 des jeweiligen Spritzrohrs 5 sowie der Versorgung nachgeschalteter Spritzrohre, im Beispiel der Versorgung der Düsen 7 des jeweils darüber liegenden Spritzrohrs 6 des zweiten, oberen Decks 3. Mit V2 ist hierbei der mittlere Volumenstrom durch die Spritzrohre 5 des ersten Decks 2 bezeichnet.

Wie die Figur 1 erkennen lässt, sind die Spritzrohre 5 des ersten Decks 2 mittels je einer Verbindungsleitung 13 in Reihenschaltung mit den Spritzrohren 6 des zweiten Decks 3 verbunden. In der Verbindungsleitung 13 fließt ein Volumenstrom V3, der der von den Düsen 7 des Spritzrohres 6 abzugebenden Menge der Berieselungsflüssigkeit 8 entspricht. In dem oberen Spritzrohr 6 herrscht ein mittlerer Volumenstrom V4.

Zur Verdeutlichung der erfindungsgemäßen Funktionsweise des Tunnelpasteurs 1 sind schematisch ein Eingangsabschnitt 5a und ein Ausgangsabschnitt 5b des ersten Spritzrohrs 5, sowie ein Eingangsabschnitt 6a und ein Endabschnitt 6b des zweiten Spritzrohrs 6 angedeutet. Der Ausgangsabschnitt 5b des ersten Spritzrohrs 5 ist vorzugsweise, jedoch nicht zwingend, direkt und ohne parallele Verzweigung mit dem Eingangsbereich 6a des zweiten Spritzrohrs 6 verbunden. In diesem Falle ist der Volumenstrom der Berieselungsflüssigkeit 8 im Ausgangsabschnitt 5b des ersten Spritzrohrs 5 und im Eingangsabschnitt 6a des zweiten Spritzrohrs 6 identisch und entspricht dem Volumenstrom V3 durch die Verbindungsleitung 13.

Der Volumenstrom durch den Eingangsabschnitt 5a des ersten Spritzrohrs 5 unterscheidet sich von dem Volumenstrom durch den Ausgangsabschnitt 5b des ersten Spritzrohrs 5 durch die aus den Düsen 7 des ersten Spritzrohrs 5 insgesamt ausgetretenen Volumenstrom der Berieselungsflüssigkeit 8.

Die erfindungsgemäße Reihenschaltung des ersten und zweiten Spritzrohrs 5, 6 bewirkt, dass sowohl die Eingangsabschnitte 5a, 6a als auch der Ausgangsabschnitt 5b des ersten Spritzrohrs 5 so stark durchströmt werden, dass Ablagerungen in diesen und zwischen diesen Abschnitten vermieden werden. Ebenso können Ablagerungen im Bereich der Düsen 7 des zweiten Spritzrohrs 6 in der Regel zuverlässig vermieden werden. Lediglich im Endabschnitt 6b des zweiten Spritzrohrs 6 nimmt der Volumenstrom durch das zweite Spritzrohr 6 soweit ab, dass Ablagerungen nicht zuverlässig vermieden werden können. Diese können sich insbesondere im Strömungsnachlauf zwischen der zuletzt angeströmten Düse 7a und dem verschlossenen Ende des zweiten Spritzrohrs 6 (in der Figur 1 durch den Endbereich 6b angedeutet) ausbilden. Bei dem erfindungsgemäßen Tunnelpasteur 1 ist somit lediglich der Endabschnitt 6b des zweiten Spritzrohrs 6 und/oder die jeweils benachbarte(n) Düse(n) 7 zu inspizieren und bei Bedarf zu reinigen.

In der Figur 1 ist schematisch der Bereich einer im zweiten Spritzrohr 6 jeweils vorgesehen Revisionsöffnung 14 mit einem abnehmbaren Deckel angedeutet. Die Revisionsöffnung 14 ist vorzugsweise so angeordnet, dass sie von außerhalb für Bedienpersonal gut zugänglich ist, beispielsweise durch eine Klappe 15 im Dachbereich des Tunnelpasteurs 1.

Der Leitungsquerschnitt der ersten Spritzrohre 5 ist vorzugsweise größer als der Leitungsquerschnitt der zweiten Spritzrohre 6 (nicht dargestellt). Die Querschnitte der ersten und zweiten Spritzrohre 5, 6 sind dann in der Art aneinander angepasst, dass in beiden Spritzrohren 5, 6 im Wesentlichen die gleiche mittlere Strömungsgeschwindigkeit vorherrscht. Dadurch wird gewährleistet, dass an den Düsen 7 beider Decks 2, 3 im Wesentlichen der gleiche dynamische Druck der Berieselungsflüssigkeit 8 herrscht. Entsprechend können die Düsen 7 beider Decks 2, 3 die gleichen Überschüttmengen der Berieselungsflüssigkeit 8 abgeben. Hierbei können die Düsen 7 beider Decks 2, 3 identisch ausgebildet sein.

Zusätzlich können sich die Abstände 16 zwischen den Düsen 7 des ersten Spritzrohrs 5 von den Abständen 17 zwischen den Düsen 7 des zweiten Spritzrohrs 6 unterscheiden (nicht gezeigt). Beispielsweise können sich die Abstände 16, 17 in der Art unterscheiden, dass in dem zweiten Spritzrohr 6 eine Düse 7 mehr vorgesehen ist als in dem ersten Spritzrohr 5. Dadurch ließe sich beispielsweise ein geodätischer Druckunterschied zwischen den Spritzrohren 5, 6 des ersten und zweiten Decks 2, 3 ausgleichen. Beispielsweise könnte aufgrund der größeren Anzahl von Düsen 7 in den zweiten Spritzrohren 6 trotz eines insgesamt geringeren geodätischen Drucks die gleiche Überschüttmenge der Berieselungsflüssigkeit 8 abgegeben werden wie von den tiefer liegenden ersten Spritzrohren 5.

Die Spritzrohre 5, 6 haben vorzugsweise einen runden Querschnitt. Denkbar wären jedoch prinzipiell auch polygonale, insbesondere rechteckige Querschnitte. Für die Spritzrohre 5 des ersten Decks 2 eignen sich beispielsweise Leitungsquerschnitte mit 55 bis 65 mm Durchmesser, für die Spritzrohre 6 des zweiten Decks 3 Leitungsquerschnitte mit 43 bis 53 mm Durchmesser. Vorzugsweise ist die mittlere Strömungsgeschwindigkeit in den Spritzrohren 5, 6 nicht größer als 4 m/s, insbesondere nicht größer als 3 m/s.

Die in der Figur 1 angedeutete zweistöckige Ausführungsform des erfindungsgemäßen Tunnelpasteurs 1 könnte durch weitere Decks (nicht dargestellt) ergänzt werden, die zu diesem Zweck zwischen dem ersten, unteren Deck 2 und dem zweiten, oberen Deck 3 anzuordnen wären. Die zugehörigen Spritzrohre wären mittels weiterer Verbindungsrohre 13 in Reihe zwischen die Spritzrohre 5, 6 des ersten und zweiten Decks 2, 3 zu schalten. Entsprechend wären die Leitungsquerschnitte der jeweiligen Spritzrohre in Durchströmungsrichtung gesehen von Deck zu Deck vorzugsweise mit kleiner werdendem Querschnitt auszulegen. Ebenso könnten die Abstände zwischen den Düsen 7 dem beschriebenen Beispiel folgend zur Kompensation geodätischer und/oder statischer Druckunterschiede zwischen den Decks 2, 3 sowie den weiteren vorgesehenen Decks angepasst werden.

Die in der Figur 1 beispielsweise mit dem Volumenstrom V3 angedeutete Durchströmungsrichtung bezüglich der Decks 2, 3 von unten nach oben ist im Hinblick auf eine einfache Inspektion und Reinigung des Tunnelpasteurs 1 besonders vorteilhaft. Wie angedeutet ist, lässt sich der erfindungsgemäße Tunnelpasteur 1 dann im Dachbereich des Tunnelpasteurs 1 auf einfache Weise kontrollieren. Beispielsweise lässt sich so die korrekte Berieselungsfunktion der am Ende der Reihenschaltung angeordneten Spritzrohre 6 überprüfen. Ebenso können die Revisionsöffnungen 14 bei Bedarf mit geringem Aufwand geöffnet und Ablagerungen in den Endabschnitten 6b der zweiten Spritzrohre 6 bei Bedarf entfernt werden. Generell ist jedoch für die korrekte Funktion des erfindungsgemäßen Tunnelpasteurs 1 auch eine Durchströmungsrichtung bezüglich der Decks 2, 3 von oben nach unten denkbar.

Ebenso wäre prinzipiell eine gruppenweise Reihenschaltung von Spritzrohren denkbar, wie dies lediglich beispielhaft in der Figur 2 für ausgangsseitig parallel zusammen gefasste erste Spritzrohre 5' angedeutet ist, die über eine gemeinsame Verbindungsleitung 13' an zwei eingangsseitig parallel zusammen gefasste zweite Spritzrohre 6' angeschlossen sind. Auch mit derartigen gruppenweisen Reihenschaltungen lässt sich die erfindungsgemäße Aufgabe dahingehend lösen, dass die Inspektion der Berieselung und eine gegebenenfalls nötige Reinigung im Wesentlichen auf die Endabschnitte 6b' der zweiten Spritzrohre 6' begrenzt werden kann. Der Leitungsquerschnitt der gemeinsamen Verbindungsleitung 13' wäre dann entsprechend auszulegen, um die geforderten Volumenströme V2, V4 auch in den zusammen gefassten Spritzrohren 5', 6' bereitstellen zu können.

In der Fig. 2 ist der Übersichtlichkeit halber lediglich der untere Transporteur 10 schematisch angedeutet und außerdem schematisch verdeutlicht, dass erfindungsgemäß mehrere einzelne Reihenschaltungen 18 mit unverzweigt miteinander verbunden Spritzrohren 5, 6 vorgesehen sein können und/oder kombinierte Reihenschaltungen 18' mit parallel zusammengefassten Verbindungsleitungen 13' zwischen Spritzrohren 5', 6' unterschiedlicher Decks.

Mit dem erfindungsgemäßen Tunnelpasteur 1 kann wie folgt gearbeitet werden:
Ein kontinuierlicher Strom aus zu pasteurisierenden Getränkegebinden 4 oder dergleichen wird in einem (nicht dargestellten) Eingangsbereich des Tunnelpasteurs 1 auf die beiden Decks 2, 3 verteilt, so dass die Getränkegebinde 4 in den jeweiligen Decks 2, 3 vorzugsweise in gleicher Weise mit der erhitzten Berieselungsflüssigkeit 8 beaufschlagt werden können. Die einzelnen Decks 2, 3 sind daher vorzugsweise als gleichartige Module aufgebaut, die sich lediglich hinsichtlich der Leitungsführung für die Berieselungsflüssigkeit 8 unterscheiden. Ein vorgegebener Volumenstrom V1 der Berieselungsflüssigkeit 8 wird hierbei vorzugsweise gleichmäßig auf sämtliche in dem Tunnelpasteur 1 vorgesehenen ersten Spritzrohre 5 verteilt. Die Berieselungsflüssigkeit 8 wird von den ersten Spritzrohren 5 zu einem Teil entsprechend einer vorgegebenen Überschüttmenge über die zu pasteurisierenden Getränkegebinde 4 verteilt und zum anderen Teil durch die ersten Spritzrohre 5 in Richtung der zweiten Spritzrohre 6 weitergeleitet. Dort wird die Berieselungsflüssigkeit 8 vorzugsweise derart über die Getränkegebinde 4 verteilt, dass diese mit der gleichen Überschüttmenge beaufschlagt werden wie im ersten Deck 2. Dadurch lässt sich eine gleichmäßige Produktqualität auch bei einem parallelen Aufteilen des Produktstroms auf die einzelnen Decks 2, 3 gewährleisten.

Bei Bedarf oder entsprechend vorgegebenen Instandhaltungsintervallen können die Endbereiche 6b der zweiten Spritzrohre 6 beispielsweise durch Öffnen von Klappen 15 im Dachbereich des Tunnelpasteurs 1 überprüft werden. Wird eine verminderte Berieselungsqualität festgestellt, können in den zweiten Spritzrohren 6 vorhandene Ablagerungen durch die Revisionsöffnungen 14 entfernt werden. Eine geforderte Produktqualität lässt sich somit mit im Vergleich zum Stand der Technik erheblich reduzierten Instandhaltungsaufwand gewährleisten. Außerdem lassen sich Ausfallzeiten für die Inspektion und Reinigung des erfindungsgemäßen Tunnelpasteurs 1 im Vergleich zum Stand der Technik reduzieren. Ebenso lässt sich die Instandhaltung des erfindungsgemäßen Tunnelpasteurs 1 hinsichtlich der Arbeitssicherheit und der Zugänglichkeit regelmäßig zu inspizierender Anlagenteile verbessern.

## Patentansprüche

1. Tunnelpasteur (1) zum Pasteurisieren von Getränkegebinden (4) oder dergleichen, mit wenigstens einem ersten und einem zweiten Deck (2, 3), die übereinander liegen und jeweils einen Förderer (10, 11) für die Getränkegebinde und quer zur Förderrichtung (9) der Förderer verlaufende Spritzrohre (5, 6) mit Düsen (7) zur Berieselung der Getränkegebinde umfassen,
**dadurch gekennzeichnet, dass**
Spritzrohre (5) des ersten Decks (2) mittels Reihenschaltung mit Spritzrohren (6) des zweiten Decks (3) verbunden sind, um eine Berieselungsflüssigkeit (8) durch das erste Deck zum zweiten Deck zu leiten.

2. Tunnelpasteur nach Anspruch 1, wobei der Leitungsquerschnitt der in Reihe geschalteten Spritzrohre (5, 6) im ersten Deck (2) größter ist als im zweiten Deck (3).

3. Tunnelpasteur nach Anspruch 1 oder 2, wobei entlang der Förderrichtung (9) mehrere Reihenschaltungen (18, 18') vorgesehen sind, insbesondere derart dass jeweils genau ein Spritzrohr (5) des ersten Decks (2) mit genau einem Spritzrohr (6) des zweiten Decks (3) verbunden ist.

4. Tunnelpasteur nach wenigstens einem der vorigen Ansprüche, wobei das zweite Deck (3) über dem ersten Deck (2) liegt.

5. Tunnelpasteur nach wenigstens einem der vorigen Ansprüche, wobei die Anzahl der Düsen (7) pro Spritzrohr (5, 6) im jeweils oberen Deck (3) größer ist als im jeweils unteren Deck (2).

6. Tunnelpasteur nach wenigstens einem der vorigen Ansprüche, wobei sich die Anzahl der im ersten Deck (2) pro Spritzrohr (5) vorgesehenen Düsen (7) von der Anzahl der im zweiten Deck (3) pro Spritzrohr (6) vorgesehenen Düsen (7) unterscheidet, und/oder sich die Abstände (16, 17) zwischen den Düsen (7) des ersten und des zweiten Decks (2, 3) voneinander unterscheiden, um eine geodätische Druckdifferenz zwischen dem ersten und dem zweiten Deck zu kompensieren, insbesondere derart dass die von den einzelnen Spritzrohren (5, 6) jeweils abgegebene Überschüttmenge der Berieselungsflüssigkeit (8) von einem Mittelwert der Überschüttmenge über alle Spritzrohre nicht mehr als 10%, insbesondere nicht mehr als 5%, abweicht.

7. Tunnelpasteur nach wenigstens einem der vorigen Ansprüche, ferner mit wenigstens einem im Bereich des zweiten Decks (3) vorgesehenen Inspektionsfenster (15) zur visuellen Berieselungskontrolle.

8. Tunnelpasteur nach wenigstens einem der vorigen Ansprüche, wobei die Spritzrohre (6) des zweiten Decks (3) an ihrem in Durchströmungsrichtung hinteren Ende (6b) eine von außen zugängliche Revisionsöffnung (14) umfassen, insbesondere im Strömungsnachlauf hinter der jeweils zuletzt angeströmten Düse (7a).

9. Tunnelpasteur nach wenigstens einem der vorigen Ansprüche, ferner mit wenigstens einem weiteren Deck, das zwischen dem ersten und dem zweiten Deck (2, 3) liegt und dessen Spritzrohre in Reihe zwischengeschaltet sind.

10. Verfahren zur Pasteurisierung von Getränkegebinden (4) oder dergleichen, bei dem die Getränkegebinde auf wenigstens zwei übereinander liegenden Decks (2, 3) gefördert und aus jeweils quer zur Förderrichtung (9) der Getränkegebinde verlaufenden Spritzrohren (5, 6) mit einer erhitzten Berieselungsflüssig (8) berieselt werden,
**dadurch gekennzeichnet, dass**
die Berieselungsflüssigkeit durch die Spritzrohre des einen Decks mittels Reihenschaltung in die Spritzrohre des anderen Decks geleitet wird.

11. Verfahren nach Anspruch 10, wobei die mittlere Strömungsgeschwindigkeit in den Spritzrohren (5, 6) nicht größer ist als 5 m/s, insbesondere nicht größer als 4 m/s.

12. Verfahren nach Anspruch 10 oder 11, wobei sich die mittlere Strömungsgeschwindigkeit in den Spritzrohren (5, 6) zwischen den Decks (2, 3) um nicht mehr als 20%, insbesondere um nicht mehr als 10%, voneinander unterscheidet.

13. Verfahren nach wenigstens einem der Ansprüche 10 bis 12, bei dem ferner die Querschnitte der Spritzrohre (5, 6) angepasst werden, um die jeweiligen durch die Berieselungsflüssigkeit (8) verursachten dynamischen Drücke an den Düsen (7) unterschiedlicher Decks (2, 3) aneinander anzugleichen.

14. Verfahren nach wenigstens einem der Ansprüche 10 bis 13, bei dem ferner die Anzahl jeweils pro Spritzrohr (5, 6) vorgesehener Düsen (7) und/oder die Abstände (16, 17) zwischen Düsen (7) einzelner Spritzrohre (5, 6) zwischen unterschiedlichen Decks (2, 3) aneinander angepasst wird/werden, um Unterschiede zwischen durch die Berieselungsflüssigkeit (8) verursachten statischen und/oder geodätischen Drücken in den Spritzrohren der unterschiedlichen Decks zu kompensieren.

15. Verfahren nach wenigstens einem der Ansprüche 10 bis 14, wobei die Getränkegebinde (4) die Decks (2,3) als parallele Teilproduktströme durchlaufen.

## Claims

1. Pasteurization tunnel (1) for pasteurizing beverage packs (4) or the like, with at least one first and one second deck (2, 3) which are situated one upon the other and each comprise a conveyor (10, 11) for the beverage packs and spraying pipes (5, 6) with nozzles (7) for spraying the beverage packs extending transversely to the conveying direction (9) of the conveyors,
**characterized in that**
spraying pipes (5) of the first deck (2) are connected by means of a series connection with spraying pipes (6) of the second deck (3) to guide a spraying liquid (8) through the first deck to the second deck.

2. Pasteurization tunnel according to claim 1, wherein the conduit cross-section of the spraying pipes (5, 6) connected in series is larger in the first deck (2) than in the second deck (3).

3. Pasteurization tunnel according to claim 1 or 2, wherein several series connections (18, 18') are provided along the conveying direction (9), in particular such that exactly one spraying pipe (5) each of the first deck (2) is connected with exactly one spraying pipe (6) of the second deck (3).

4. Pasteurization tunnel according to at least one of the preceding claims, wherein the second deck (3) is situated above the first deck (2).

5. Pasteurization tunnel according to at least one of the preceding claims, wherein the number of nozzles (7) per spraying pipe (5, 6) is higher in the respective upper deck (3) than in the respective lower deck (2).

6. Pasteurization tunnel according to at least one of the preceding claims, wherein the number of nozzles (7) per spraying pipe (5) provided in the first deck (2) differs from the number of nozzles (7) per spraying pipe (6) provided in the second deck (3), and/or the distances (16, 17) between the nozzles (7) of the first and the second decks (2, 3) differ from each other to compensate a geodetic pressure differential between the first and the second decks, in particular in such a way that the pouring amount of the spraying liquid (8) each discharged from the individual spraying pipes (5, 6) does not deviate from a mean value of the pouring amount across all spraying pipes by more than 10 %, in particular by more than 5 %.

7. Pasteurization tunnel according to at least one of the preceding claims, furthermore with at least one inspection port (15) provided in the region of the second deck (3) for visual spray inspection.

8. Pasteurization tunnel according to at least one of the preceding claims, wherein the spraying pipes (6) of the second deck (3) comprise, at their rear end (6b) seen in the direction of flow, an access opening (14) accessible from outside, in particular downstream of the last nozzle (7a) to be reached by the flow in the last runnings of the flow.

9. Pasteurization tunnel according to at least one of the preceding claims, furthermore with at least one further deck situated between the first and the second decks (2, 3) whose spraying pipes are inserted in series.

10. Method for pasteurizing beverage packs (4) or the like, wherein the beverage packs are conveyed on at least two decks (2, 3) lying one upon the other and are sprayed from spraying pipes (5, 6) each extending transversely to the conveying direction (9) of the beverage packs with a heated spraying liquid (8),
**characterized in that**
the spraying liquid is guided through the spraying pipes of the one deck into the spraying pipes of the other deck by means of a series connection.

11. Method according to claim 10, wherein the mean flow rate in the spraying tubes (5, 6) is not higher than 5 m/s, in particular not higher than 4 m/s.

12. Method according to claim 10 or 11, wherein the mean flow rate in the spraying pipes (5, 6) between the decks (2, 3) does not differ from each other by more than 20 %, in particular by more than 10 %.

13. Method according to at least one of claims 10 to 12, wherein furthermore the cross-sections of the spraying pipes (5, 6) are adapted to match the respective dynamic pressures caused by the spraying liquid (8) at the nozzles (7) of different decks (2, 3).

14. Method according to at least one of claims 10 to 13, wherein furthermore the number of nozzles (7) provided per spraying pipe (5, 6) and/or the distances (16, 17) between nozzles (7) of individual spraying pipes (5, 6) between different decks (2, 3) are matched to compensate differences between static and/or dynamic geodetic pressures in the spraying pipes of the different decks caused by the spraying liquid (8).

15. Method according to at least one of claims 10 to 14, wherein the beverage packs (4) pass through the decks (2, 3) as parallel partial product streams.

## Revendications

1. Tunnel de pasteurisation (1) destiné à la pasteurisation d'emballages ou de packs de boissons (4) ou similaires, comprenant au moins un premier et un deuxième étage (2, 3), qui sont mutuellement superposés et comportent respectivement un transporteur (10, 11) pour les emballages de boissons, ainsi que des tubes de pulvérisation (5, 6), qui s'étendent transversalement à la direction de transport (9) des transporteurs et comportent des buses (7) pour arroser les emballages de boissons,
**caractérisé en ce que**
des tubes de pulvérisation (5) du premier étage (2) sont reliés, moyennant un montage en série, à des tubes de pulvérisation (2) du deuxième étage (3), en vue de diriger et conduire un liquide d'arrosage (8) à travers le premier étage, vers le deuxième étage.

2. Tunnel de pasteurisation selon la revendication 1, dans lequel la section transversale de conduite des tubes de pulvérisation (5, 6) montés en série est plus grande dans le premier étage (2) que dans le deuxième étage (3).

3. Tunnel de pasteurisation selon la revendication 1 ou la revendication 2, dans lequel le long de la direction de transport (9) sont prévus plusieurs montages en série (18, 18'), notamment respectivement de manière telle qu'exactement un tube de pulvérisation (5) du premier étage (2) soit relié à exactement un tube de pulvérisation (6) du deuxième étage (3).

4. Tunnel de pasteurisation selon l'une au moins des revendications précédentes, dans lequel le deuxième étage (3) est situé au-dessus du premier étage (2).

5. Tunnel de pasteurisation selon l'une au moins des revendications précédentes, dans lequel le nombre des buses (7) par tube de pulvérisation (5, 6) est plus grand dans l'étage (3) respectivement supérieur, que dans l'étage (2) respectivement inférieur.

6. Tunnel de pasteurisation selon l'une au moins des revendications précédentes, dans lequel le nombre des buses (7) prévues dans le premier étage (2) par tube de pulvérisation (5), diffère du nombre des buses (7) prévues dans le deuxième étage (3) par tube de pulvérisation (6), et/ou les distances (16, 17) entre les buses (7) du premier et du deuxième étage (2, 3) sont différentes les unes des autres, en vue de compenser une différence de pression géodésique entre le premier et le deuxième étage, notamment de manière telle que le volume d'arrosage du liquide d'arrosage (8) délivré respectivement par les tubes de pulvérisation (5, 6) individuels, ne s'écarte pas plus de 10%, notamment pas plus de 5%, d'une valeur moyenne du volume d'arrosage par l'intermédiaire de tous les tubes de pulvérisation.

7. Tunnel de pasteurisation selon l'une au moins des revendications précédentes, comprenant par ailleurs au moins une fenêtre d'inspection ou de visite (15) prévue dans la zone du deuxième étage (3), pour un contrôle visuel de l'arrosage.

8. Tunnel de pasteurisation selon l'une au moins des revendications précédentes, dans lequel les tubes de pulvérisation (6) du deuxième étage (3) présentent, à leur extrémité (6b) finale dans la direction du passage d'écoulement, une ouverture de révision ou d'entretien (14) accessible de l'extérieur, notamment dans la partie d'écoulement aval après la dernière buse (7a) respectivement atteinte par l'écoulement.

9. Tunnel de pasteurisation selon l'une au moins des revendications précédentes, comprenant, par ailleurs, au moins un autre étage, qui se situe entre le premier et le deuxième étage (2, 3), et dont les tubes de pulvérisation sont intercalés selon un montage en série.

10. Procédé de pasteurisation d'emballages ou de packs de boissons (4) ou similaires, d'après lequel les emballages de boissons sont transportés sur au moins deux étages (2, 3) superposés et sont arrosés avec un liquide d'arrosage (8) chauffé, à partir de tubes de pulvérisation (5, 6) qui s'étendent chacun transversalement à la direction de transport (9),
**caractérisé en ce que**
le liquide d'arrosage est dirigé et conduit à travers les tubes de pulvérisation de l'un des étages vers les tubes de pulvérisation de l'autre étage par montage en série de ces tubes.

11. Procédé selon la revendication 10, d'après lequel la vitesse d'écoulement moyenne dans les tubes de pulvérisation (5, 6) n'est pas plus grande que 5 m/s, notamment pas plus grande que 4 m/s.

12. Procédé selon la revendication 10 ou la revendication 11, d'après lequel la vitesse d'écoulement moyenne dans les tubes de pulvérisation (5, 6) ne diffère pas plus de 20%, notamment pas plus de 10%, entre les étages (2, 3).

13. Procédé selon l'une au moins des revendications 10 à 12, d'après lequel les sections transversales des tubes de pulvérisation (5, 6) sont adaptées pour égaliser mutuellement les pressions dynamiques respectives produites par le liquide d'arrosage (8), au niveau des buses (7) d'étages (2, 3) différents.

14. Procédé selon l'une au moins des revendications 10 à 13, d'après lequel, par ailleurs, le nombre de buses (7) prévu respectivement par tube de pulvérisation (5, 6) et/ou les distances (16, 17) entre les buses (7) de tubes de pulvérisation individuels (5, 6) est/sont adaptés mutuellement entre des étages (5, 6) différents, en vue de compenser des différences entre des pressions statiques et/ou géodésiques produites par le liquide d'arrosage (8) dans les tubes de pulvérisation des étages différents.

15. Procédé selon l'une au moins des revendications 10 à 14, d'après lequel les emballages ou packs de boissons (4) traversent les étages (2, 3) sous forme de flux partiels, parallèles, de produit.
